# FASCICULE DE BREVET EUROPEEN

(11) **EP 0 987 071 B1**
(45) Date de publication et mention de la délivrance du brevet: **23.07.2003**
(21) Numéro de dépôt: 99402242.4
(22) Date de dépôt: 13.09.1999
(51) Int. Cl.: B21D 51/22

(54) **Procédé pour augmenter la résistance à la rayure et à l'usure d'un revètement anti-adhésif appliqué sur une plaque en aluminium**
Verfahren zur Erhöhung der Radiations- und der Verschleissbeständigkeit einer adhäsiven Beschichtigungszusammensetzung auf einer Aluminiumplatte
Method for increasing radiation and wear resistance of an anti-adhesive layer on an aluminium plate

(30) Priorité: 17.09.1998 FR 9811639
(43) Date de publication de la demande: 22.03.2000
(73) Titulaire: SEB S.A., 69130 Ecully (FR)
(72) Inventeur: Brasset, Jean-François, 74960 Cran Gevrier (FR)
(74) Mandataire: Somnier, Jean-Louis

(56) Documents cités:
- DE-U- 9 111 901
- FR-A- 2 693 093
- FR-A- 2 741 553
- US-A- 4 350 259
- US-A- 5 497 696
- US-A- 5 564 590
- US-A- 5 694 674

## Description

La présente invention concerne un procédé pour augmenter la résistance à la rayure et à l'usure d'un revêtement anti-adhésif appliqué sur une plaque en aluminium.

L'invention vise également un récipient de cuisson réalisé par emboutissage d'un disque en aluminium et comportant une surface intérieure revêtue d'une couche anti-adhésive, par exemple en polytétrafluoréthylène (PTFE).

On sait que les revêtements anti-adhésifs à base de PTFE appliqués à l'intérieur des ustensiles culinaires présentent l'inconvénient d'être sensibles à la rayure et à l'usure.

De nombreuses solutions ont été proposées pour remédier à l'inconvénient ci-dessus.

L'une de ce solutions consiste à appliquer le revêtement de PTFE sur une surface comportant des reliefs au lieu d'être lisse, comme décrit dans US 5,694,674.

De ce fait, les parties du revêtement en PTFE situées entre les sommets des reliefs deviennent insensibles aux rayures.

Le but de la présente invention est de proposer une autre solution pour remédier à l'inconvénient évoqué ci-dessus.

Ce but est atteint par un procédé selon la revendication 1 ou par un récipient selon la revendication 2.

Ainsi la grille ou feuille ajourée en métal dur fait plus ou moins saillie au-dessus du revêtement anti-adhésif situé dans les ajours de la grille ou de la feuille ajourée.

On améliore ainsi considérablement la résistance aux rayures et à l'usure du fond intérieur du récipient revêtu d'anti-adhésif.

De préférence, la grille ou feuille ajourée est en acier inoxydable.

D'autres particularités et avantages de l'invention apparaîtront encore dans la description ci-après.

Aux dessins annexés donnés à titre d'exemples non limitatifs :
- la figure 1 est une vue en perspective d'un disque en aluminium revêtu de PTFE sur lequel est fixée par frappe une grille en métal dur ;
- la figure 2 est un schéma illustrant le procédé de fixation par frappe d'une grille ou feuille ajourée sur un disque en aluminium ;
- la figure 3 est une vue en plan partielle d'une feuille ajoutée ;
- la figure 4 est une vue en plan partielle d'une grille ;
- la figure 5 est une vue en coupe partielle du disque et de la feuille ajourée partiellement encastrée dans la surface du disque ;
- la figure 6 est une vue analogue à la figure 5, la feuille ajourée étant totalement encastrée.

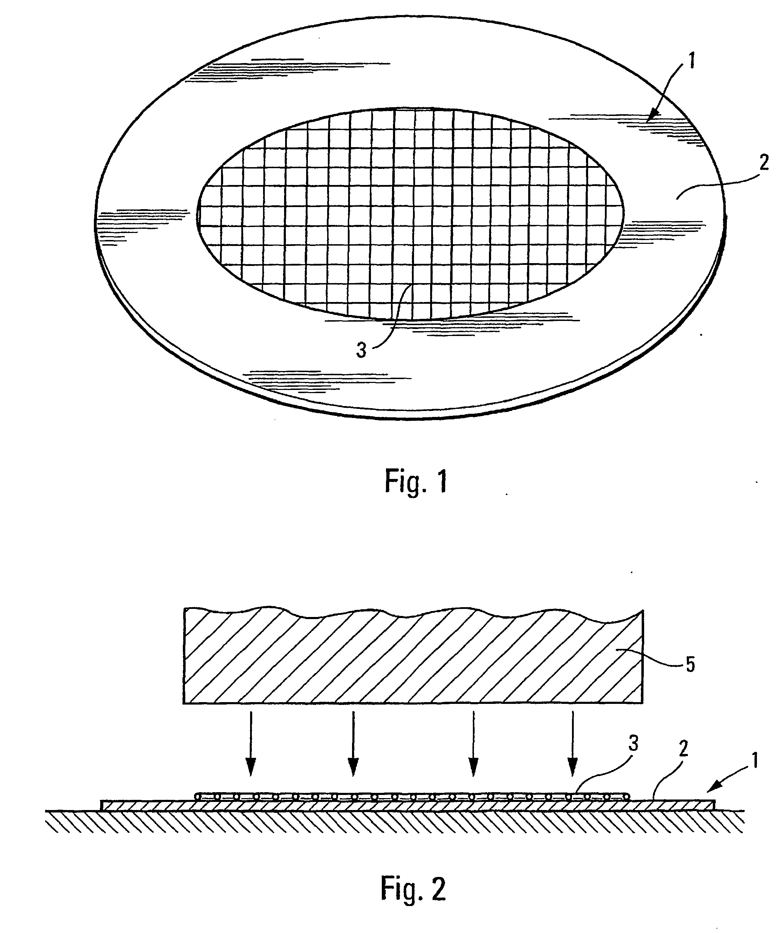

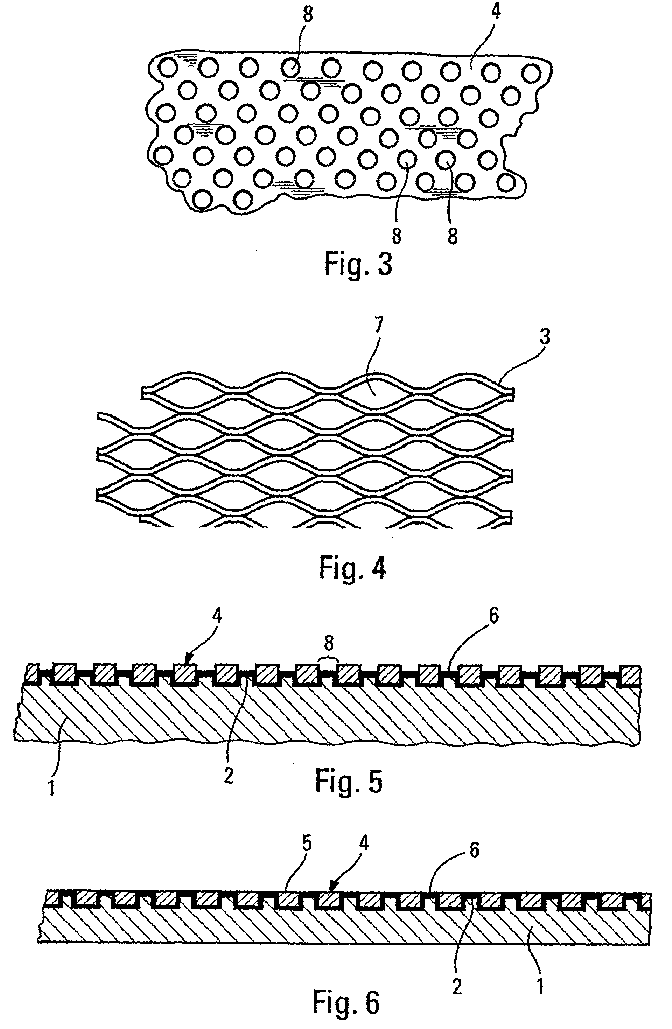

En référence aux figures annexées, le procédé pour augmenter la résistance à la rayure et à l'usure d'un revêtement anti-adhésif appliqué sur une plaque ou disque 1 en aluminium consiste à fixer par frappe ou matriçage sur la face 2 de la plaque 1 revêtue d'anti-adhésif, une grille 3 (figures 1, 2, 4) ou une feuille ajourée 4 (figures 3, 5, 6) en métal plus dur que l'aluminium, de manière à encastrer au moins partiellement la grille 3 ou feuille ajourée 4 dans la face 2 de la plaque 1.

La frappe ou matriçage est réalisée au moyen d'un poinçon 5 (voir figure 2).

Le procédé ci-dessus s'applique de préférence à la fabrication d'un récipient de cuisson réalisé par emboutissage d'un disque 1 en aluminium et comportant une surface intérieure revêtue d'une couche anti-adhésive telle que du PTFE.

Sur le fond de ladite surface intérieure du récipient est fixée par frappe ou matriçage, une grille 3 ou une feuille ajourée 4 en métal plus dur que l'aluminium tel que de l'acier inoxydable. La grille 3 ou feuille ajourée 4 est encastrée partiellement (voir figure 5) ou totalement (voir figure 6) dans le fond de la surface intérieure du récipient.

Dans l'exemple de la figure 6, la grille ou feuille ajourée 4 est complètement encastrée dans le fond de la surface intérieure 2 du récipient.

De ce fait la surface 5 de la grille ou feuille ajourée 4 est située dans le prolongement de la surface 6 du revêtement anti-adhésif qui est situé dans les ajours 7 de la grille 3 ou les trous 8 de la feuille ajourée 4.

La surface revêtue d'anti-adhésif peut varier en proportions différentes, par exemple de 50 à 80% de la surface totale du fond du récipient, sachant que l'optimum se situe entre 60 et 80% de la surface totale du fond du récipient.

Cette réduction de la proportion revêtue d'anti-adhésif du fond du récipient de cuisson entraîne une relative diminution des propriétés anti-adhérentes de ce fond.

Toutefois, cet inconvénient est compensé par l'augmentation de la résistance à la rayure et à l'usure obtenue grâce à la grille 3 ou à la feuille ajourée 4 encastrée dans la surface du fond du récipient de cuisson.

## Revendications

1. Procédé pour augmenter la résistance à la rayure et à l'usure d'un revêtement anti-adhésif appliqué sur une plaque (1) en aluminium, **caractérisé en ce qu'**il consiste à fixer par frappe ou matriçage, sur la face (2) de la plaque (1) revêtue d'anti-adhésif, une grille (3) ou une feuille ajourée (4) en métal plus dur que l'aluminium de manière à encastrer au moins partiellement ladite grille (3) ou feuille ajourée (4) dans ladite face (2) de la plaque (1) revêtue d'anti-adhésif.

2. Récipient de cuisson réalisé par emboutissage d'un disque (1) en aluminium et comportant une surface intérieure (2), ladite surface intérieure (2) étant revêtue d'une couche anti-adhésive et comportant une grille (3) ou une feuille ajourée (4) en métal plus dur que l'aluminium encastrée au moins partiellement dans ladite surface intérieure (2), **caractérisé en ce que** le revêtement anti-adhésif est uniquement situé dans les ajours (7, 8) de la grille (3) ou de la feuille ajourée (4).

3. Récipient conforme à la revendication 2, **caractérisé en ce que** la grille (3) ou feuille ajourée (4) est en acier inoxydable.

4. Récipient conforme à l'une des revendications 2 ou 3, **caractérisé en ce que** la grille (3) ou feuille ajourée (4) est complètement encastrée dans la surface intérieure (2) du récipient de sorte que la surface (5) de la grille (3) ou feuille ajourée (4) est située dans le prolongement de la surface (6) du revêtement anti-adhésif.

5. Récipient conforme à l'une des revendications 2 à 4, **caractérisé en ce que** la surface revêtue d'anti-adhésif représente entre 50 à 80%, de préférence entre 60 à 80%, de la surface totale du fond du récipient.

## Patentansprüche

1. Verfahren zur Erhöhung der Radiations- und der Verschleissbeständigkeit einer Antihaftbeschichtung auf einer Aluminiumplatte (1),
**dadurch gekennzeichnet, dass** es darin besteht, auf der mit der Antihaftbeschichtung versehenen Seite (2) der Platte (1) ein Gitter (3) oder eine durchbrochene Folie (4) aus einem Metall, das härter ist als Aluminium, durch Schlagen oder Prägen dergestalt zu befestigen, dass dieses Gitter (3) oder die durchbrochene Folie (4) zumindest teilweise in diese mit der Antihaftbeschichtung versehene Seite (2) der Platte (1) versenkt wird.

2. Kochbehältnis, das durch Tiefziehen einer Scheibe (1) aus Aluminium mit einer Innenfläche (2) hergestellt wird, wobei diese Innenfläche (2) mit einer Antihaftbeschichtung versehen ist und ein Gitter (3) oder eine durchbrochene Folie (4) aus einem Metall, das härter ist als Aluminium, zumindest teilweise in diese mit der Antihaftbeschichtung versehene Innenfläche (2) versenkt aufweist,
**dadurch gekennzeichnet, dass** die Antihaftbeschichtung sich ausschließlich in den Durchbrüchen (7, 8) des Gitters (3) oder der durchbrochenen Folie (4) befindet.

3. Behältnis nach Anspruch 2,
**dadurch gekennzeichnet, dass** das Gitter (3) oder die durchbrochene Folie (4) aus rostfreiem Stahl besteht.

4. Behältnis nach einem der Ansprüche 2 oder 3,
**dadurch gekennzeichnet, dass** das Gitter (3) oder die durchbrochene Folie (4) vollständig in die Innenfläche (2) des Behältnisses versenkt ist, so dass die Oberfläche (5) des Gitters (3) oder der durchbrochenen Folie (4) sich in der Verlängerung der Oberfläche (6) der Antihaftbeschichtung befindet.

5. Behältnis nach einem der Ansprüche 2 bis 4,
**dadurch gekennzeichnet, dass** die Antihaftbeschichtung 50 bis 80 %, vorzugsweise 60 bis 80 % der Gesamtoberfläche des Bodens des Behältnisses bildet.

## Claims

1. A method of increasing the scratch and wear resistance of an anti-adhesive coating applied to an aluminium plate (1), **characterised in that** it consists in fixing a grid (3) or perforated sheet (4) of metal harder than aluminium by stamping or die forming on the surface (2) of the plate (1) coated with anti-adhesive, so that the grid (3) or perforated sheet (4) is at least partly embedded in the surface (2) of the plate (1) coated with anti-adhesive.

2. A cooking vessel made by pressing an aluminium disc (1) and comprising an inner surface (2), the inner surface (2) being coated with an anti-adhesive layer and comprising a grid (3) or perforated sheet (4) of metal harder than aluminium and at least partly embedded in the said inner surface (2), **characterised in that** the anti-adhesive coating is disposed only in the perforations (7, 8) of the grid (3) or the perforated sheet (4).

3. A vessel according to claim 2, **characterised in that** the grid (3) or perforated sheet (4) is of stainless steel.

4. A vessel according to claim 2 or 3, **characterised in that** the grid (3) or perforated sheet (4) is completely embedded in the inner surface (2) of the vessel so that the surface (5) of the grid (3) or perforated sheet (4) is situated in line with the surface (6) of the anti-adhesive coating.

5. A vessel according to any of claims 2 to 4, **characterised in that** the surface coated with anti-adhesive makes up between 50 and 80%, preferably between 60 and 80%, of the total surface area of the bottom of the vessel.
